# EUROPEAN PATENT SPECIFICATION

(11) **EP 4 518 130 B1**
(45) Date of publication and mention of the grant of the patent: **22.07.2026**
(21) Application number: 23306461.7
(22) Date of filing: 04.09.2023
(51) Int. Cl.: H02M 3/335, H02M 3/28, H02M 1/32

(54) **FAULT TOLERANT CONVERTER WITH SEAMLESS RECONFIGURATION TOPOLOGY**
FEHLERTOLERANTER UMRICHTER MIT NAHTLOSER REKONFIGURATIONSTOPOLOGIE
CONVERTISSEUR INSENSIBLE AUX DÉFAILLANCES À TOPOLOGIE DE RECONFIGURATION SANS COUPURE

(43) Date of publication of application: 05.03.2025
(73) Proprietor: NXP B.V., 5656 AG Eindhoven (NL)
(72) Inventor: Troudi, Rami, 31023 Toulouse Cedex 1 (FR); Santiago, Erik, 31023 Toulouse Cedex 1 (FR); Dubois, Antoine Fabien, Austin 78735 (US)
(74) Representative: Schmütz, Christian Klaus Johannes

(56) References cited:
- US-A1- 2016 094 135
- US-A1- 2019 393 793
- WU ZONGHENG ET AL: "High Efficiency and High Power Density Partial Power Regulation Topology With Wide Input Range", IEEE TRANSACTIONS ON POWER ELECTRONICS, INSTITUTE OF ELECTRICAL AND ELECTRONICS ENGINEERS, USA, vol. 38, no. 2, 16 September 2022 (2022-09-16), pages 2074 - 2091, XP011927471, ISSN: 0885-8993, [retrieved on 20220919], DOI: 10.1109/TPEL.2022.3207526

## Description

### FIELD OF THE INVENTION

The present invention relates in general to power converters, and more particularly to a fault tolerant voltage converter with seamless reconfiguration topology.

### DESCRIPTION OF THE RELATED ART

Voltage converters, including direct-current (DC)-DC isolated converters and the like, are susceptible to various types of failures, including, for example, overcurrent or undercurrent conditions, overvoltage or undervoltage conditions, short-circuits, open-circuits, etc. High-voltage to low-voltage (HV-LV) DC-DC converters, including those used in electric vehicles (EVs) or other such applications, for example, may be equipped with the ability to detect failure conditions and either shut down or switch over to a fully redundant converter to maintain functionality. With non-redundant topologies, however, if any one of the electronic power switching devices of the converter fails, the system is considered unsafe and is simply shutdown.

In autonomous driving for EVs and the like, however, availability is a crucial constraint and complete shutdown is not a suitable option. Automobiles including EVs may need to meet certain safety standards, such as, for example, the Automotive Safety Integrity Level (ASIL) risk classification system defined by the International Standard Organization (ISO) 26262 standard for the functional safety of road vehicles. In many conventional EV configurations, therefore, full redundancy was the preferred solution to provide a safe and fault-tolerant system to maintain availability of the system in the event of a failure. Full redundancy, including the provisioning of two stages in the primary and secondary with the use of two separate transformers, was often the solution to guarantee the availability of the converter. Such fully redundant converter systems, however, are bulky and costly.

US 2019/0393793 A1 discloses a power switching circuit including a transformer, a rectifying unit, a first switching unit, a second switching unit and a feedback unit. The transformer includes a central-tapped terminal. The transformer is configured to output a first power signal. The rectifying unit is coupled to the transformer. The rectifying unit receives the first power signal and outputs a second power signal to a load. The first switching unit is coupled to the central-tapped terminal of the transformer. The second switching unit is coupled to the rectifying unit and the first switching unit. The feedback unit is configured to receive the second power signal and control the first switching unit and the second switching unit.

US 2016/0094135 A1 discloses an apparatus comprising an isolated power converter coupled to an input dc power source, wherein the isolated power converter comprises a primary switching network operating at a fixed switching frequency, a secondary resonant tank including a dc blocking capacitor and a rectifier having two input terminals coupled to the secondary resonant tank, an output capacitor coupled between a first output terminal of the rectifier and a load and a dc/dc converter coupled between a second output terminal of the rectifier and the load.

Wu et al, in "High Efficiency and High Power Density Partial Power Regulation Topology With Wide Input Range", IEEE Transactions on Power Electronics, Vol. 38, No. 2, 2023, pp 2074-2091, disclose a partial power regulation topology that delivers load power through a three-port LLC-based regulated dc transformer. A pulse width modulation converter is cascaded with one of the input ports of the regulated dc transformer and then in series with the other input port to regulate the output voltage.

### SUMMARY

According to the invention there is provided a DC-DC converter as defined by the appended claims.

### BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.
FIG. 1 is a simplified schematic and block diagram of a fault tolerant DC-DC converter with seamless reconfiguration topology implemented according to one embodiment.
FIG. 2 is a simplified schematic and block diagram of the output circuit of FIG. 1 implemented according to one embodiment.
FIG. 3 is a simplified schematic diagram of the primary power supply of FIG. 1 according to one embodiment.
FIG. 4 is a timing diagram illustrating operation of the converter controller of FIG. 1 controlling the switches S01 - S04 shown in FIG. 3 and operation of the devices S1 - S4 shown in FIG. 1 according to one embodiment, and illustrating operation of the buck boost controller of FIG. 1 controlling the switches SA and SB shown in FIG. 2 according to one embodiment.
FIG. 5 is a current flow diagram illustrating current flow through the main power converter and through the mirrored power converter of FIG. 1 in response to a positive pulse of the VP primary voltage during normal operation according to one embodiment.
FIG. 6 is a current flow diagram illustrating current flow through the main power converter and through the mirrored power converter of FIG. 1 in response to a negative pulse of VP during normal operation according to one embodiment.
FIG. 7 is a tabular diagram that charts operation of the converter of FIG. 1 including the output circuit shown in FIG. 2 during normal operation and during failure of any one of the switches S1 - S4 according to one embodiment.
FIG. 8 is a series of timing diagrams plotting the voltage levels of VOUT1 and VOUT2 and the output current IOUT versus time of the DC-DC converter of FIG. 1 operating with less than maximum load conditions before and after an open-circuit failure of S1 according to one embodiment.
FIG. 9 is a series of timing diagrams plotting the voltage levels of VOUT1 and VOUT2 and the output current IOUT versus time of the DC-DC converter of FIG. 1 operating with less than maximum load conditions before and after an open-circuit failure of S3 according to one embodiment.

### DETAILED DESCRIPTION

A fault tolerant converter with seamless reconfiguration topology as disclosed herein provides a technological solution to increase the availability of the converter by maintaining a nominal output voltage and a significant output current capacity in the event of failure of a current control device which may be configured as a diode or an electronic switch. The reconfiguration is enabled using a mirrored configuration of a secondary portion of the converter without having to provide full redundancy. The mirrored configuration uses a natural path reconfiguration and a simple referral system, such as a buck-boost converter or the like. The fault tolerant converter is particularly advantageous for electric vehicle (EV) applications, such as, for example, an isolated high-voltage (HV) - low voltage (LV) converter that converts higher voltages (e.g., 400V to 800V) to lower voltages (e.g., 12V, 14.6V, 48V, etc.).

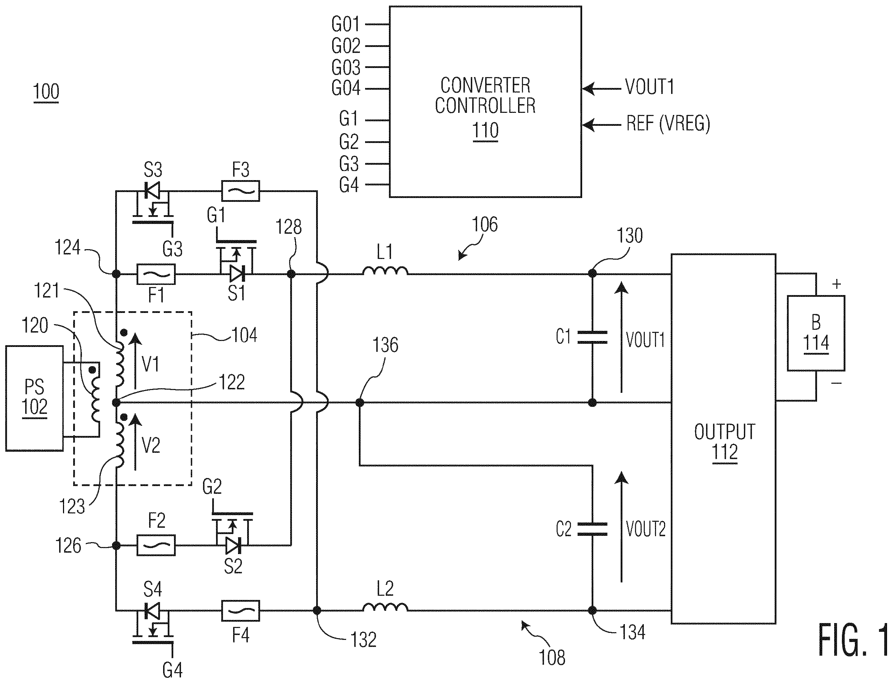

FIG. 1 is a simplified schematic and block diagram of a fault tolerant DC-DC converter 100 with seamless reconfiguration topology implemented according to one embodiment. The DC-DC converter 100 includes an input power supply (PS) 102, a transformer 104, a main power converter 106, a mirrored power converter 108, a converter controller 110, and an output circuit 112, which may be coupled to drive a battery (B) 114. The transformer 104 includes a primary coil 120 and a secondary coil with a tapped connection 122, such as a center tap, forming an upper secondary coil 121 and a lower secondary coil 123. The main power converter 106 includes a first current control device S1, a second current control device S2, a first inductor L1, and a first capacitor C1 developing a first or main output voltage VOUT1. The mirrored power converter 108 is configured in a substantially similar manner but coupled to essentially mirror the main power converter 106. The mirrored power converter 108 includes a third current control device S3, a fourth current control device S4, a second inductor L2, and a second capacitor C2 developing a second or mirrored output voltage VOUT2.

Each of the current control devices S1 - S4 is a transistor with a pair of current terminals, such as source and drain terminals or collector and emitter terminals or the like, and also a control terminal, such as a gate terminal or a base terminal or the like. A current control device may fail forming a permanent short-circuit or a permanent open-circuit of the current path.

The main power converter 106 and the mirrored power converter 108 both include line fuses or other types of circuit breaker devices to avoid over-current operation. As shown, the main power converter 106 includes first and second line fuses F1 and F2 and the mirrored power converter 108 includes third and fourth fuses F3 and F4. In one embodiment, the PS 102 is a high voltage power supply driving a high voltage output across the primary coil 120 of the transformer 104. In one embodiment, PS 102 converts an input voltage of 400 Volts (V) to 800V or the like, although alternative voltage levels are contemplated. In one embodiment, the DC-DC converter 100 is used as an HV to LV converter for an EV application, although alternative converters and applications are contemplated. It is appreciated, for example, that the present disclosure may apply to translation or conversion between voltage levels of any amount, including equal voltage levels on either side of a transformer.

The main power converter 106 has an input coupled across the upper and lower secondary coils 121 and 123 and an output for developing VOUT1 across the capacitor C1 coupled between nodes 130 and 136, in which VOUT1 is provided to the output circuit 112. In a similar manner, the mirrored power converter 108 has an input coupled across the upper and lower secondary coils 121 and 123 and an output for developing VOUT2 across the capacitor C2 coupled between nodes 136 and 134, in which VOUT2 is also provided to the output circuit 112. VOUT1 is regulated by the converter controller 110 to a predetermined regulated voltage level VREG, such as, for example, 12V, 14.6V, 48V, etc., indicated by an input value REF. REF may be a voltage value (e.g., VREF) or may have any other form (e.g., current, digital, etc.) indicative of VREG for regulating VOUT1. During normal open loop operation, VOUT2 is generally driven to a reverse and mirrored voltage level of VOUT1 based on the symmetry of the converter configuration, but is also regulated at the same voltage level as VOUT1 as further described herein.

The upper secondary coil 121 of the transformer 104 has a dotted end coupled to a node 124 and an undotted end coupled to the tap 122, and the lower secondary coil 123 has a dotted end coupled to the tap 122 and an undotted end coupled to a node 126. The fuse F1 is coupled in series with the current terminals of the current control device S1 between node 124 and a node 128, and the fuse F2 is coupled in series with the current terminals of the current control device S2 between node 126 and the node 128. The inductor L1 is coupled between node 128 and a first or main output node 130 (developing VOUT1) which is coupled to the output circuit 112. The current terminals of the current control device S3 are coupled in series with the fuse F3 between node 124 and a node 132, and the current terminals of the current control device S4 are coupled in series with the fuse F4 between node 126 and the second node 132. The inductor L2 is coupled between node 132 and a second or mirrored output node 134 (developing VOUT2) which is coupled to the output circuit 112. The intermediate tap 122 of the secondary coil of the transformer 104 may be a center tap, which is coupled to the output circuit 112 via an intermediate node 136. A voltage V1 develops across the upper secondary coil 121 between nodes 124 and 136 and a voltage V2 develops across the lower secondary coil 123 between nodes 136 and 126.

VOUT1 is the primary output voltage developed as a positive voltage on the main output node 130 relative to node 136 (as indicated by the arrow adjacent VOUT1), and VOUT2 is the mirrored output voltage developed as a corresponding positive voltage on node 136 relative to the mirrored output node 134. In the illustrated embodiment, the voltage on node 134 may be a negative value while the voltage on node 130 may be a positive value.

In one embodiment, each of the fuses F1 - F4 are line fuses that are blown during a corresponding overcurrent condition. In this manner, when any one of the current control devices S1, S2, S3, and S4 fail in such a manner as to become short-circuited, the corresponding fuse F1, F2, F3, and F4, respectively, is blown thereby open-circuiting the corresponding current path. As an example, if S1 becomes short-circuited, the momentarily increased current causes F1 to be blown to open-circuit the current path between nodes 124 and 128. The other fuses F2 - F4 operate in the substantially the same manner in the event of failure of the corresponding current control devices S2 - S4. In alternative embodiments, any one or more of the fuses F1 - F4 may instead be configured as other types of circuit breaker devices, such as a back-to-back MOS-type field-effect transistor (MOSFET), or a pyrotechnical safety switch or pyro-switch, or an ideal FET without an internal diode to block current in either direction. It is noted that when any one of the current control devices S1 - S4 fail in such a manner as to become open-circuited, the fault condition is substantially the same since the corresponding current path becomes open-circuited regardless of whether the corresponding fuse is not blown.

In one embodiment, each of the current control devices S1 - S4 may be implemented as an N-channel FET or a MOSFET or other similar type transistors. As shown, for example, S1 may have a source terminal coupled to one end of the fuse F1 (having its other end coupled to node 124) and a drain terminal coupled to node 128, S2 may have a source terminal coupled to one end of the fuse F2 (having its other end coupled to node 126) and a drain terminal coupled to node 128, S3 may have a source terminal coupled to one end of the fuse F3 (having its other end coupled to node 132) and a drain terminal coupled to node 124, and S4 may have a source terminal coupled to one end of the fuse F4 (having its other end coupled to node 132) and a drain terminal coupled to node 126. It is noted that the relative positions of any fuse and corresponding switch combination may be swapped. The current control devices S1 - S4 configured as transistors have gate terminals receiving gate signals G1, G2, G3, and G4, respectively, from the converter controller 110 for controlling the current control devices S1 - S4. The converter controller 110 has inputs receiving VOUT1 and REF and operates in a closed-loop configuration with PS 102 to regulate VOUT1 to the predetermined voltage level VREG.

Configuring each of the current control devices S1 - S4 as electronic switches, such as MOSFETs, has the advantage of reducing impedance in order to minimize power losses.

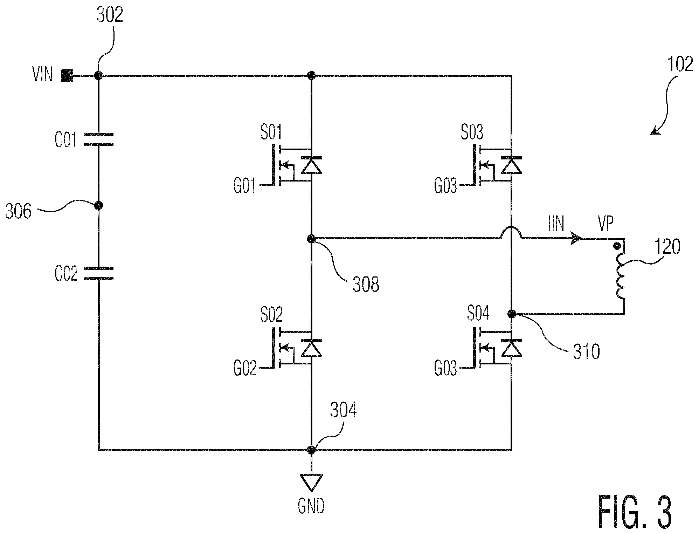

In one embodiment, the converter controller 110 performs phase-shift modulation control of electronic switches S01, S02, S03, and S04 (S01 - S04, FIG. 3) within the PS 102 to regulate the voltage level of VOUT1 to the regulated voltage level VREG. With reference to FIG. 3, the switches S01 - S04 have gate terminals receiving gate signals G01, G02, G03, and G04, respectively, from the converter controller 110 for controlling the switches S01 - S04. During normal operation via open loop operation with respect to the main power converter 106, VOUT2 is driven to about the same voltage magnitude as VOUT1 (e.g., VOUT2 is a mirrored and negative version of VOUT1). As described further herein, the converter controller 110 may control the current control devices S1 - S4 of the main power converter 106 and the mirrored power converter 108 when configured as electronic switches based on phase-shift control of the switches S01 - S04 to share current between the converters at substantially the same level during normal operation. In the event of failure of any one of the current control devices S1 - S4 resulting in a fault condition, such as either a short-circuit or open-circuit failure, the voltage level of VOUT1 is maintained and the output current capacity may only be partially reduced.

A conventional configuration does not include the mirrored power converter 108. The main power converter 106 is a main output configuration providing the main output voltage VOUT1 whereas the mirrored power converter 108 is a mirrored output configuration providing the mirrored output voltage VOUT2. Having mirrored output configurations creates a mirror effect so that any failure of a current control device in one output configuration is seamlessly and automatically handled by the other current control devices and the output circuit 112. As a result, the system can react to short-circuit and open-circuit failures in both output configuration control loops.

Suppose, for example, that S1 fails and is short-circuited causing a fault mode. In normal mode, S1 and S4 should be blocked when voltage V2 is negative while S2 and S3 conduct. When S1 is shorted, however, current may flow through S1 whenever V2 is positive or negative even when S2 would otherwise be biased or switched off. When implemented as a MOSFET switch or the like, S1 has a body diode creating a short-circuit. When S1 is short-circuited in this manner, fuse F1 is blown to block the short-circuit current path through S1 and devices S2, S3, and S4 continue to provide power during the faulty mode. If instead S1 fails by being open-circuited, substantially the same result is achieved regardless of whether F1 is blown. Thus, for either a short-circuit or open-circuit fault condition of S1, the regulation loop automatically compensates the current lost in S1 by increasing current in the other switches to maintain the voltage level of VOUT1 while achieving a slightly reduced maximum output current capacity. In one embodiment, the maximum output current capacity may be reduced by up to 25%. Substantially the same results are achieved when any one of the other current control devices S2, S3, or S4 fails in the same manner (i.e., any one of the current control devices S2 - S4 are either short-circuited or open-circuited) in which the corresponding fuses F2 - F3 ensure an open-circuit fault condition.

In one embodiment, the combination of the main power converter 106 and the mirrored power converter 108 allows for a corresponding reduction in size of the current control devices S1 - S4 by a factor of 2 to 4, particularly when configured as electronic switches due to power current sharing for a further cost reduction.

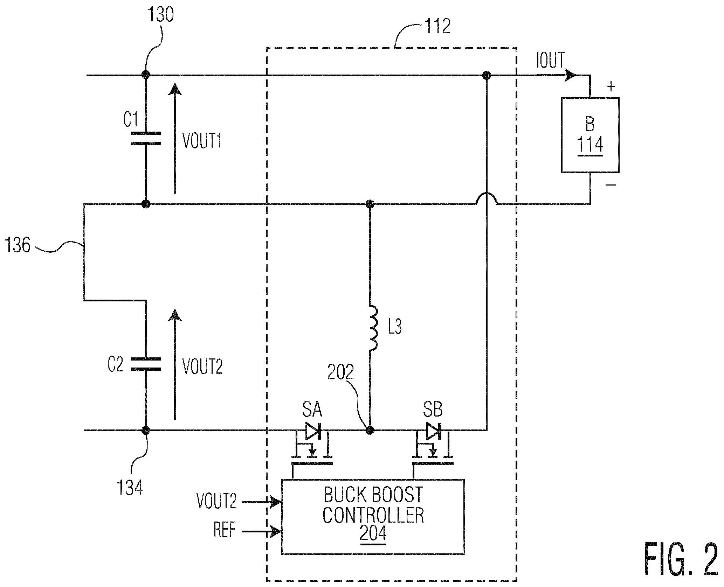

FIG. 2 is a simplified schematic and block diagram of the output circuit 112 implemented according to one embodiment coupled to nodes 130, 134, and 136 and the battery 114. The output circuit 112 is a referral system in the form of a buck boost converter including a pair of current control devices SA and SB, an inductor L3, and a buck boost controller 204. The inductor L3 has one end coupled to node 136 and another end coupled to a node 202. The current control device SA has current terminals coupled between nodes 134 and 202 and a control terminal coupled to an output of the buck boost controller 204. The current control device SB has current terminals coupled between nodes 130 and 202 and a control terminal coupled to an output of the buck boost controller 204. The battery 114 is shown coupled between nodes 130 and 136 and thus across the main output voltage VOUT1. An output current IOUT flows from the output circuit 112 to the battery 114, although a portion of IOUT may be provided to other load circuitry (not shown). The buck boost controller 204 has inputs receiving VOUT2 and REF in which it controls SA and SB to regulate the voltage level of VOUT2 based on REF. Since REF is also used at the reference for VOUT1, VOUT1 and VOUT2 are regulated to about the same regulated voltage VREG. Since VOUT2 is also driven by the PS 102 in open-loop configuration and controlled by a separate converter 204, the voltage level of VOUT2 may deviate somewhat from VOUT1 during a normal to fault mode transition.

The current control devices SA and SB may also be configured as MOSFETs or the like. As shown, for example, SA has a source terminal coupled to node 134, a drain terminal coupled to node 202, and a gate terminal coupled to the buck boost controller 204, and SB has a source terminal coupled to node 202, a drain terminal coupled to node 130, and a gate terminal coupled to the buck boost controller 204. It is noted that the buck boost controller 204 substantially controls switch SA with a direct regulation function and that SB does not have a direct regulation function but instead is controlled with opposite phase as SA. SB configured as a MOSFET has the advantage of reducing impedance in order to minimize power losses.

As shown, the battery 114, which represents the primary load, is coupled directly to the VOUT1, which is the main output voltage of the converter 100. SA and SB are controlled by the buck boost controller 204 to distribute current from the mirrored power converter 108 to the output load including the battery 114 via the main output node 130. When switch SA is turned on, current from VOUT2 (via the capacitor C2) flows from node 136 to node 134 through L3. When switch SA is turned off and SB is turned on (or forward biased when configured as a diode or the like), the current through L3 flows to the main output node to contribute to the output current IOUT. During normal mode of operation, because of the symmetry of the converter configurations 106 and 108 and since VOUT1 and VOUT2 are regulated to the same voltage level, the output current IOUT is substantially shared between the converters 106 and 108.

During any fault mode of operation caused by failure of any one of the current control devices S1 - S4, the converter controller 110 adjusts switching operation of the PS 102 to maintain the voltage level of VOUT1, and the buck boost controller 204 adjusts operation to compensate for lost current to maintain output current demand to the extent possible.

FIG. 3 is a simplified schematic diagram of the PS 102 according to one embodiment. An input voltage VIN is provided between a node 302 and a reference or ground (GND) node 304 across input capacitors C01 and C02. VIN may have a relatively high voltage level, such as 400V to 800V or the like. The capacitor C01 is coupled between node 302 and an intermediate node 306 and the capacitor C02 is coupled between node 306 and the GND node 304. S01 has current terminals coupled between node 302 and a node 308 and S02 has current terminals coupled between nodes 308 and 204. S03 has current terminals coupled between node 302 and a node 310 and S04 has current terminals coupled between nodes 310 and 304. The primary coil 120 has a dotted end coupled to node 308 and an undotted end coupled to node 310 and develops a primary voltage VP. An input current IIN is shown with arrow flowing into dotted end of the primary coil 120 (where it is understood that current may flow in either direction). In one embodiment, the switches S01 - S04 may be implemented as N-channel FETs or MOSFETs or other similar type transistors. As shown, S01 has a source terminal coupled to node 308 and S03 has a source terminal coupled to node 310, and S01 and S02 have drain terminals coupled to node 302. Also, S02 has a drain terminal coupled to node 308 and S04 has a drain terminal coupled to node 310, and S03 and S04 have source terminals coupled to GND node 204. The gate signals G01 - G04 are provided by the converter controller 110 to corresponding gate terminals to control the switches S01 - S04 as further described herein to regulate VOUT1.

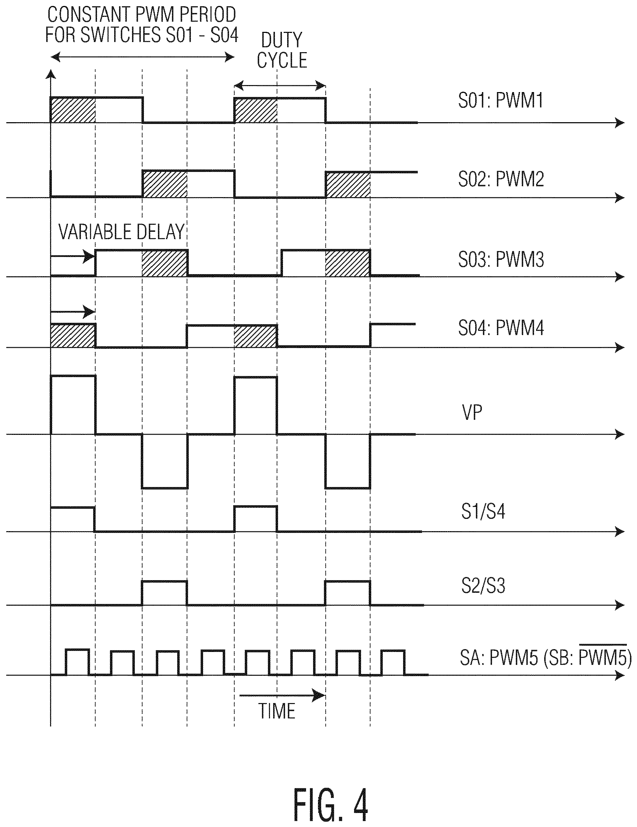

FIG. 4 is a timing diagram illustrating operation of the converter controller 110 controlling the switches S01 - S04 and operation of the current control devices S1 - S4 according to one embodiment, and illustrating operation of the buck boost controller 204 controlling the switches SA and SB according to one embodiment. Each of the switches S01 - S04 are controlled with corresponding pulse-width modulation (PWM) signals to implement phase-shift control. The switches S01 - S04 are controlled with a constant PWM period, and may also have a constant duty cycle, such as, in one embodiment, 50%. The buck boost controller 204 controls switch SA with a variable or dynamic duty cycle and controls SB with a phase opposite that of SA.

According to phase-shift operation, S01, S02, S03, and S04 are controlled with PWM signals PWM1, PWM2, PWM3, and PWM4, respectively. PWM1 and PWM2 are maintained 180 degrees out of phase with respect to each other and PWM3 and PWM4 are maintained 180 degrees out of phase with respect to each other, in which PWM3 and PWM4 are phase-shifted or delayed relative to PWM1 and PWM2. The delay of PWM3 and PWM4 relative to PWM1 and PWM2 is varied according to phase-shift operation as controlled by the converter controller 110. The shaded areas of PWM1 and the corresponding shaded areas of PWM4 occur when PWM1 and PWM4 are both high generating a positive pulse on voltage VP. The shaded areas of PWM2 and the corresponding shaded areas of PWM3 occur when PWM2 and PWM3 are both high generating a negative pulse on voltage VP. The converter controller 110 varies the delay of PWM3 and PWM4 relative to PWM1 and PWM2 to control the positive and negative pulses of VP to control the input current IIN through the primary coil 120 of the transformer 104, which is ultimately used to regulate the output voltage VOUT1.

The current control devices S1 and S4 are forward-biased or otherwise turned on by the converter controller 110 during a positive VP pulse and otherwise turned off or reverse-biased. The current control devices S1 and S4 may be configured as diodes which are forward biased during the positive VP pulse. Similarly, the current control devices S2 and S3 are turned on by the converter controller 110 during a negative VP pulse and otherwise turned off or reverse-biased. The current control devices S2 and S3 may be configured as diodes which are forward biased during the negative VP pulse.

The buck boost controller 204 applies a variable PWM signal PWM5 to SA (while simultaneously applying a PWM signal P̅W̅M̅5̅ having an opposite phase as PWM5) to regulate VOUT2 to the same predetermined voltage level VREG as VOUT1. The regulation of VOUT2 by the buck boost controller 204 is complicated by the fact that the mirrored power converter 108 driving VOUT2 is in an open-loop configuration with PS 102, which is also in a closed-loop configuration with the main power converter 106 regulating VOUT1. During normal mode when each of the current control devices S1 - S4 are operative, because of the symmetrical configuration, VOUT2 is driven to about the same voltage level as VOUT1 and the buck boost controller 204 drives SA with PWM5 at about a 50% duty cycle to share the output current level at substantially equal levels.

In the event of a fault condition, meaning the failure of any one of the current control devices S1 - S4, the converter configuration becomes asymmetric and operation is reconfigured accordingly. In the event of failure of S1 or S2, the current capacity of the main power converter 106 suddenly decreases which may cause a momentary decrease of VOUT1. It is noted that the maximum current capacity of the main power converter 106 is effectively reduced by half because of the loss of one of the two current control devices S1 and S2. The converter controller 110 responds by adjusting operation of the PS 102 accordingly to maintain VOUT1 at its regulated level. The adjusted operation of the PS 102 may cause VOUT2 to momentarily increase somewhat. In addition, the loss of current provided by the main power converter 106 may increase the current supplied by the mirrored power converter 108 from C2 through L3 which otherwise tends to drive VOUT2 lower. The buck boost controller 204 responds accordingly by adjusting PWM5 to an adjusted duty cycle that is necessary to return VOUT2 to its regulated level.

In the event of failure of S3 or S4, the current capacity of the mirrored power converter 108 suddenly decreases although VOUT1 is substantially maintained at its regulated level. It is noted that the maximum current capacity of the mirrored power converter 108 is effectively reduced by half because of the loss of one of the two current control devices S3 and S4. The momentary loss of current capacity of the mirrored power converter 108 causes a momentary fluctuation of the voltage level of VOUT2. Meanwhile, the converter controller 110 responds to any decrease of VOUT1 by adjusting operation of the PS 102 accordingly to maintain VOUT1 at its regulated level. The adjusted operation of the PS 102 may tend to cause VOUT2 to increase somewhat during the transition from normal mode to fault mode. The buck boost controller 204 responds accordingly by adjusting PWM5 to an adjusted duty cycle that is necessary to return VOUT2 to its regulated level.

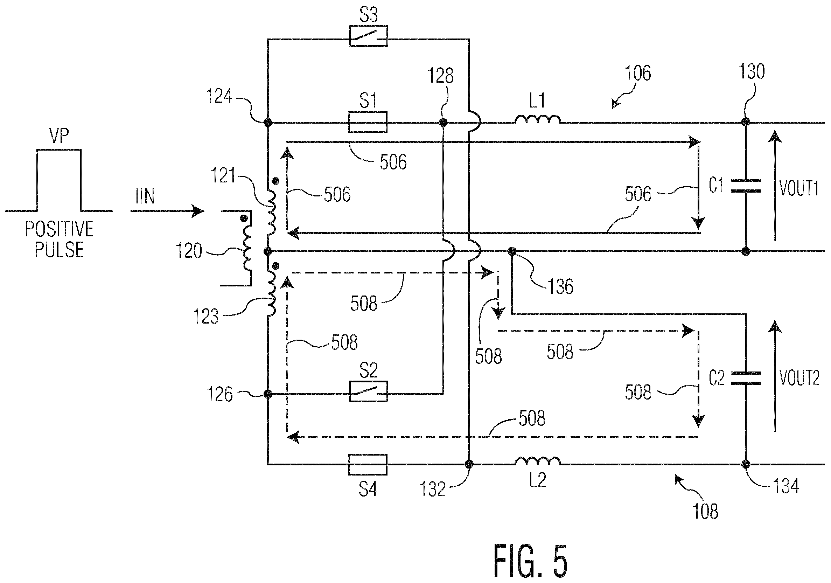

FIG. 5 is a current flow diagram illustrating current flow through the main power converter 106 and through the mirrored power converter 108 in response to a positive pulse of VP during normal operation according to one embodiment. As shown in FIG. 4, the primary voltage VP toggles between positive and negative pulses over time in which the duration of each pulse is based on the value of the variable delay. During the VP positive pulse, S1 and S4 are turned on as depicted as closed switches and S2 and S3 are turned off as depicted as opened switches. The fuses F1 - F4 are not shown as assumed to be closed-circuited during normal operation. A positive VP pulse tends to increase the input current IIN shown flowing into the dotted end of the primary coil 120. Solid arrows 506 depict resulting current flow through the main power converter 106 and hollow arrows 508 depict resulting current flow through the mirrored power converter 108.

The arrows 506 indicate that the main power converter 106 develops current flowing out of the dotted end of the secondary coil 121, through S1, through L1 via node 128, into and through C1, and back to the undotted end of the secondary coil 121 via node 136. The arrows 508 indicate that the mirrored power converter 108 develops current flowing out of the dotted end of the secondary coil 123, into and through C2 via node 136, through L2, through S4, and back to the undotted end of the secondary coil 123. When turned on or forward biased, S1 and S4 develop current flowing from their current terminals in which current is not intended to flow in the opposite direction during any of the operating conditions. It is noted that actual current flowing through segments or nodes with arrows 506 and 508 in the opposite direction (e.g., 122 and 136) may be a combination of currents.

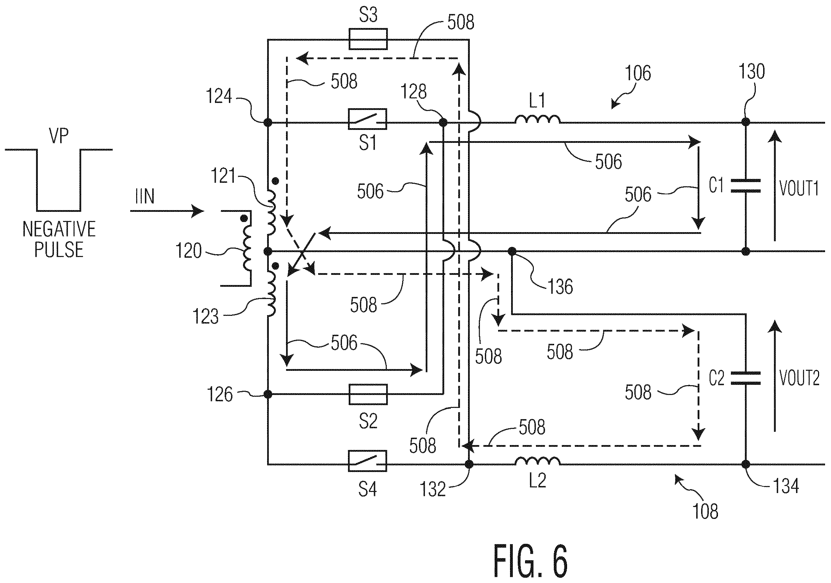

FIG. 6 is a current flow diagram illustrating current flow through the main power converter 106 and through the mirrored power converter 108 in response to a negative pulse of VP during normal operation according to one embodiment. During the VP negative pulse, S1 and S4 are turned off (or reverse biased) as depicted as opened switches and S2 and S3 are turned on (or forward biased) as depicted as closed switches. Again, the fuses F1 - F4 are not shown as assumed to be closed-circuited during normal operation. A negative VP pulse tends to decrease and even reverse the input current IIN shown flowing into the dotted end of the primary coil 120. Again, solid arrows 506 depict resulting current flow through the main power converter 106 and hollow arrows 508 depict resulting current flow through the mirrored power converter 108.

The arrows 506 indicate that the main power converter 106 develops current flowing out of the undotted end of the secondary coil 123, through S2, up to and through L1 via node 128, into and through C1, and back to the dotted end of the secondary coil 123. The arrows 508 indicate that the mirrored power converter 108 develops current flowing into the dotted end of the secondary coil 121, into and through C2 via node 136, through L2, up to and through S3 via node 132, and back to the dotted end of the secondary coil 121. When turned on or forward biased, S2 and S3 develop current flowing through current terminals in which current is not intended to flow in the opposite direction during any of the operating conditions. It is noted that actual current flowing through segments or nodes with arrows 506 and 508 in the opposite direction (e.g., 122 and 136) may be a combination of currents.

It can be seen that failure of S1 interrupts current flow of the main power converter 106 developing VOUT1 during the positive VP pulse but does not interfere with current of the main power converter 106 developing VOUT1 during the negative VP pulse. Also, failure of S1 does not interfere current flow of the mirrored power converter 108 developing VOUT2 during either of the VP pulses. Hence, failure of S1 may result in a 25% reduction of overall current flow.

Similarly, failure of S2 interrupts current flow of the main power converter 106 developing VOUT1 during the negative VP pulse but does not interfere with current of the main power converter 106 developing VOUT1 during the positive VP pulse. Also, failure of S2 does not interfere current flow of the mirrored power converter 108 during either of the VP pulses. Hence, failure of S2 also may result in a 25% reduction of overall current flow.

It can also be seen that failure of S3 interrupts current flow of the mirrored power converter 108 developing VOUT2 during the negative VP pulse but does not interfere with current of the mirrored power converter 106 developing VOUT2 during the positive VP pulse. Also, failure of S3 does not interfere current flow of the main power converter 106 developing VOUT1 during either of the VP pulses. Hence, failure of S3 may also result in a 25% reduction of overall current flow.

Similarly, failure of S4 interrupts current flow of the mirrored power converter 108 developing VOUT2 during the positive VP pulse but does not interfere with current of the mirrored power converter 108 developing VOUT2 during the negative VP pulse. Also, failure of S4 does not interfere current flow of the main power converter 106 during either of the VP pulses. Hence, failure of S4 may also result in a 25% reduction of overall current flow.

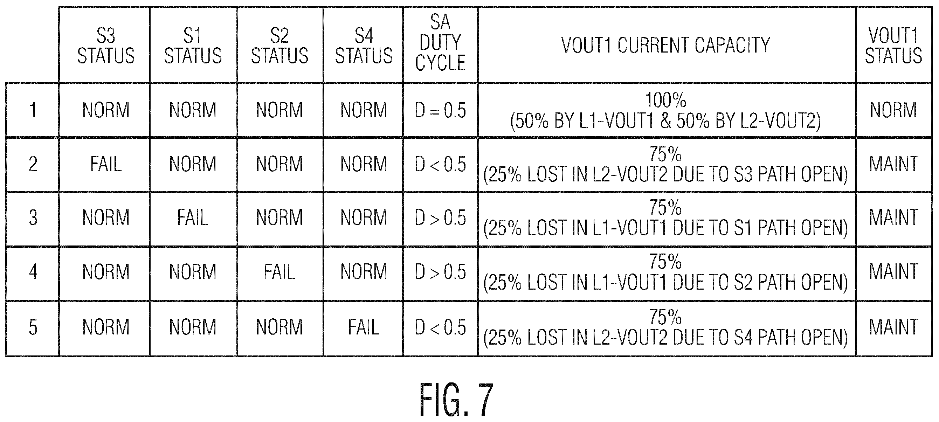

FIG. 7 is a tabular diagram that charts operation of the converter 100 including the output circuit 112 during normal operation and during failure of any one of the current control devices S1 - S4 according to one embodiment. The columns from left to right list status of S3, S1, S2, and S4, the duty cycle of SA, the current capacity of the converter 100 at VOUT1, and the status of the voltage level of VOUT1. The status of any of the current control devices S1 - S4 is either normal (NORM) or failed (FAIL), in which a failed status may indicate either a short-circuit failure or an open-circuit failure. As previously described, when the failure is a short-circuit, the corresponding fuse is blown so that the switch path is open-circuited with substantially the same results. The duty cycle (D) of SA is normally equal to about 50% (or D = 0.5), but may be increased above 50% or decreased below 50% depending upon which current control device has failed. The VOUT1 current capacity is listed as a percentage relative to a full capacity of 100%. The voltage level of VOUT1 is normal (NORM) when at its regulated voltage level or is maintained (MAINT) at the same regulated voltage level during a fault condition.

Normal operation is depicted in the first row in which the status of each of the current control devices S1 - S4 is normal, the duty cycle of SA is 50%, VOUT1 current capacity is 100%, and VOUT1 is regulated at is normal voltage level. The second row depicts failure of only S3 (either shorted or opened) in which the duty cycle of SA decreased below 50% (D < 0.5), the VOUT1 current capacity is reduced to 75% (25% lost in L2 caused by loss of current through S3), and VOUT1 is maintained at is normal voltage level. The third row depicts failure of only S1 (either shorted or opened) in which the duty cycle of SA increases above 50% (D > 0.5), the VOUT1 current capacity is reduced to 75% (25% lost in L1 caused by loss of current through S1), and VOUT1 is maintained at is normal voltage level. The fourth row depicts failure of only S2 (either shorted or opened) in which the duty cycle of SA increases above 50% (D > 0.5), the VOUT1 current capacity is reduced to 75% (25% lost in L1 caused by loss of current through S2), and VOUT1 is maintained at is normal voltage level. The fifth row depicts failure of only S4 (either shorted or opened) in which the duty cycle of SA decreases below 50% (D < 0.5), the VOUT1 current capacity is reduced to 75% (25% lost in L2 caused by loss of current through S4), and VOUT1 is maintained at is normal voltage level.

Generally speaking, during any failure of any one of the current control devices S1 - S4, the voltage level of VOUT1 (and also VOUT2) may momentarily change but is ultimately maintained and the output current capacity may be somewhat reduced though sufficient to handle most if not all load conditions. Substantially all functionality is maintained although an error condition may be indicated for repair.

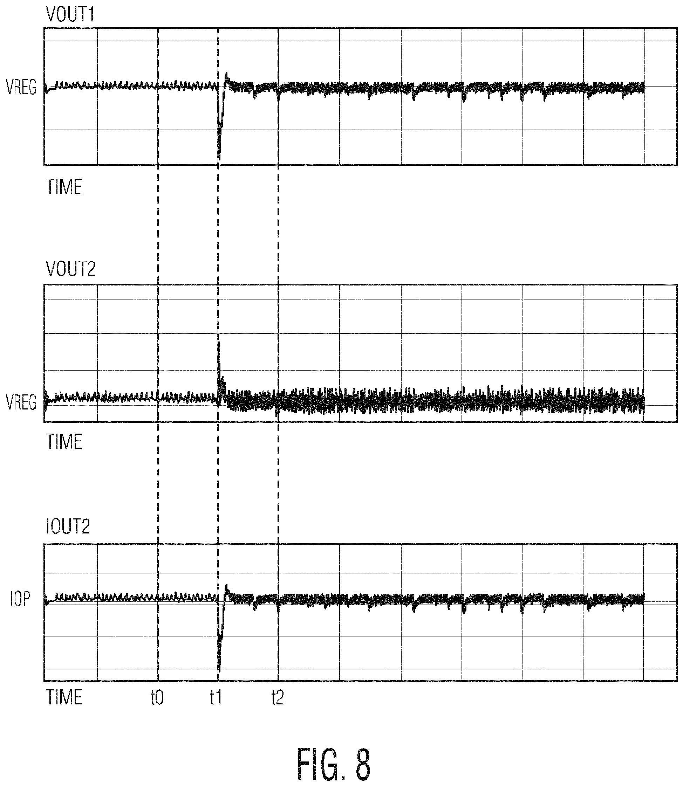

FIG. 8 is a series of timing diagrams plotting the voltage levels of VOUT1 and VOUT2 and the output current IOUT versus time of the DC-DC converter 100 operating with less than maximum load conditions before and after an open-circuit failure of S1 according to one embodiment. After power-up or reset (POR), the converter 100 stabilizes by a time t0 in which VOUT1 and VOUT2 both reach the regulated voltage level VREG and the output current is at a normal operating current level IOP. In one embodiment, for example, VREG is 14.6V and IOP may be at any level between 20 - 40 Amperes (A), although alternative voltage and current levels are contemplated.

At a subsequent time t1, S1 suffers an open-circuit failure in which VOUT1 temporarily drops below VREG and the output current IOUT momentarily drops below IOP. The converter controller 110 quickly responds by adjusting operation of the PS 102 to bring VOUT1 back to VREG. The phase of PS 102 adjusts and stabilizes to increase current output to compensate for current loss through L1 to bring IOUT back to IOP. Meanwhile, VOUT2 momentarily increases in magnitude partially caused by increased operation of PS 102. The duty cycle of PWM5 driving switch SA increases to reduce VOUT2 back to VREG and to contribute additional output current. The converter 100 eventually recovers by a time t2 in which VOUT1 and VOUT2 both return to the regulated voltage level VREG and the output current returns to about IOP.

Although not shown, the response to a short-circuit failure of S1 is similar. In the event of a short-circuit failure of S1, the voltage level of VOUT1 and the output current level may temporarily fluctuate before the fuse F1 is blown. After F1 is blown, which occurs almost immediately, the DC-DC converter 100 quickly recovers to that shown at time t2 since the current path through S1 is open-circuited in a similar manner as that shown in FIG. 8. Although not shown, the response to a failure of S2 is substantially the same as the response to a failure of S1.

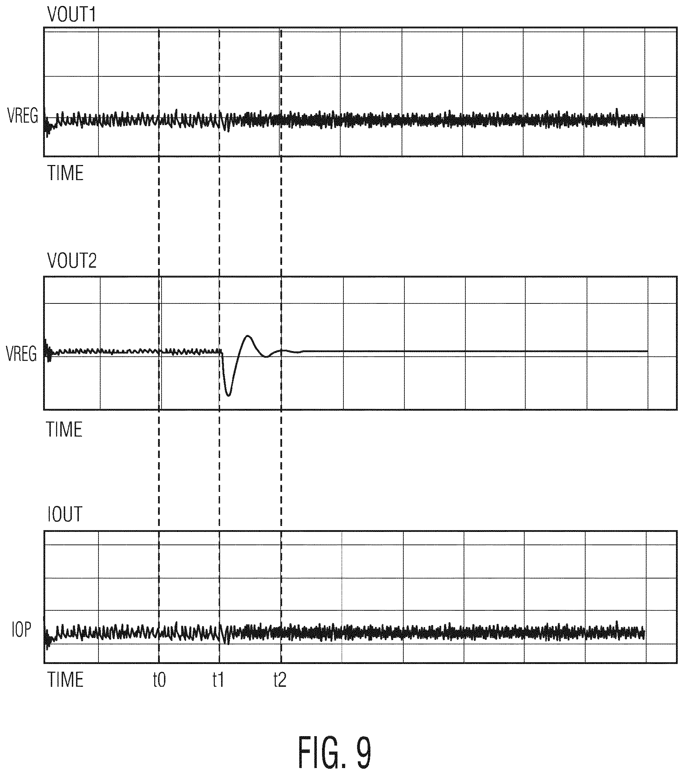

FIG. 9 is a series of timing diagrams plotting the voltage levels of VOUT1 and VOUT2 and the output current IOUT versus time of the DC-DC converter 100 operating with less than maximum load conditions before and after an open-circuit failure of S3 according to one embodiment. The converter 100 operates normally at time t0 in which VOUT1 and VOUT2 both reach the regulated voltage level VREG and the output current is at a normal operating current level IOP in a similar manner as described for FIG. 8.

At a subsequent time t1, S3 suffers an open-circuit failure. In this case, the converter controller 110 continues operation so that VOUT1 remains substantially at VREG and the output current IOUT substantially remains at IOP. The sudden loss of S3 causes VOUT2 to momentarily decrease in magnitude. The duty cycle of PWM5 driving switch SA decreases to bring VOUT2 back to VREG, and the duty cycle of SA stabilizes at a reduced level to increase current flow through L3 to the output to maintain IOUT at IOP. The converter 100 eventually recovers by a time t2 in which VOUT2 returns to the regulated voltage level VREG.

Although not shown, the response to a short-circuit failure of S3 is similar. In the event of a short-circuit failure of S3 the fuse F3 is blown which occurs almost immediately, the DC-DC converter 100 quickly recovers to that shown since the S3 current path is open-circuited in a similar manner as that shown in FIG. 9. Although not shown, the response to a failure of S4 is substantially the same as the response to a failure of S3.

It is noted that FIGs 8 and 9 both depict operation of the DC-DC converter 100 operating with less than maximum load conditions in which loss of 25% converter current capacity is still sufficient to drive the current load indicated by the normal operating current level IOP. If the DC-DC converter 100 is operating at maximum load current conditions, then the output current may be reduced somewhat depending upon converter configurations.

The foregoing description has addressed failure of one of the current control devices S1 - S4. Operation in the event of failure of two (2) of the current control devices S1 - S4 at the same time depends upon which pair of devices has failed. In the event of failure of one of the current control devices S1 and S2 and one of S3 and S4, or in the event of failure of both current control devices S3 and S4, the DC-DC converter 100 may continue to operate at 50% full capacity level based. A 50% capacity may be sufficient for most normal load levels. In the event of failure of both current control devices S1 and S2, normal regulation of VOUT 1 by the converter controller 110 is lost and operation may be shut down. Although not shown or described, the converter controller 110 may be configured to switch to regulation of VOUT2 in the event of failure of both current control devices S1 and S2 and thus may continue to operate at 50% full capacity level rather than being shut down.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims.

## Claims

1. A DC-DC converter (100), comprising:
a transformer (104) having a primary coil (120) configured to be driven by a power supply (102) and having a secondary coil (121, 123) with an intermediate tap (122);
a main power converter (106) comprising: a first transistor (S1) having a first current terminal coupled to a first end of the secondary coil (121, 123) and a second current terminal coupled to a first node (128); a second transistor (S2) having a first current terminal coupled to a second end of the secondary coil (121, 123) and a second current terminal coupled to the first node (128); a first inductance (L1) coupled between the first node (128) and a main output node (130); and a first capacitance (C1) coupled between the main output node (130) and the intermediate tap (122) for developing a main output voltage (Vout1) between the main output node (130) and the intermediate tap (122);
a mirrored power converter (108) comprising: a third transistor (S3) having a first current terminal coupled to a second node (132) and a second current terminal coupled to the first end of the secondary coil (121, 123); a fourth transistor (S4) having a first current terminal coupled to the second node (132) and a second current terminal coupled to the second end (126) of the secondary coil (121, 123); a second inductance (L2) coupled between the second node (132) and a mirrored output node (134); and a second capacitance (C2) coupled between the mirrored output node (134) and the intermediate tap (122) for developing a mirrored output voltage (VOUT2) between the mirrored output node (134) and the intermediate tap (122);
output circuitry (122) comprising: a third inductance (L3) coupled between the intermediate tap (122) and a third node (202); a fifth transistor (SA) coupled between the mirrored output node (134) and the third node (202); a sixth transistor (SB) coupled between the third node (202) and the main output node (130); and an output controller (204) coupled to control the fifth and sixth transistors (SA, SB), wherein the output circuitry (122) is configured to regulate a voltage level of the mirrored output voltage (VOUT2) and to provide load current (IOUT) to the main output node (130) from the mirrored power converter (108); and
a converter controller (110) configured to control the power supply (102) to regulate a voltage level of the main output voltage (VOUT1), the converter controller (110) coupled to a control terminal of each of the first, second, third and fourth transistors (S1, S2, S3, S4).

2. The DC-DC converter (100) of claim 1, wherein upon failure of either one of the third and fourth transistors (S3, S4), the converter controller (110) is configured to increase load current provided by the main power converter (106) and wherein the output circuitry (112) is configured to adjust operation of the mirrored power converter (108) to supplement load current provided to the main output node (130).

3. The DC-DC converter (100) of claim 1, further comprising a first fuse (F1) coupled in series with the first and second current terminals of the first transistor (S1), a second fuse (F2) coupled in series with the first and second current terminals of the second transistor (S2), a third fuse (F3) coupled in series with the first and second current terminals of the third transistor (S3), and a fourth fuse (F4) coupled in series with the first and second current terminals of the fourth transistor (S4).

4. The DC-DC converter (100) of any of claims 1 to 3, wherein the output circuitry (112) is configured to increase load current provided by the mirrored power converter (108) upon failure of either one of the first and second transistors (S1, S2).

## Patentansprüche

1. DC-DC-Wandler (100), umfassend:
einen Transformator (104) mit einer Primärspule (120), die dazu ausgelegt ist, durch eine Leistungsversorgung (102) angesteuert zu werden, und mit einer Sekundärspule (121, 123) mit einem Zwischenabgriff (122);
einen Hauptleistungswandler (106), der umfasst: einen ersten Transistor (S1) mit einem ersten Stromanschluss, der mit einem ersten Ende der Sekundärspule (121, 123) gekoppelt ist, und einem zweiten Stromanschluss, der mit einem ersten Knoten (128) gekoppelt ist; einen zweiten Transistor (S2) mit einem ersten Stromanschluss, der mit einem zweiten Ende der Sekundärspule (121, 123) gekoppelt ist, und einem zweiten Stromanschluss, der mit dem ersten Knoten (128) gekoppelt ist; eine erste Induktivität (L1), die zwischen dem ersten Knoten (128) und einem Hauptausgangsknoten (130) gekoppelt ist; und eine erste Kapazität (C1), die zwischen dem Hauptausgangsknoten (130) und dem Zwischenabgriff (122) gekoppelt ist, zum Entwickeln einer Hauptausgangsspannung (Vout1) zwischen dem Hauptausgangsknoten (130) und dem Zwischenabgriff (122);
einen gespiegelten Leistungswandler (108), der umfasst: einen dritten Transistor (S3) mit einem ersten Stromanschluss, der mit einem zweiten Knoten (132) gekoppelt ist, und einem zweiten Stromanschluss, der mit dem ersten Ende der Sekundärspule (121, 123) gekoppelt ist; einen vierten Transistor (S4) mit einem ersten Stromanschluss, der mit dem zweiten Knoten (132) gekoppelt ist, und einem zweiten Stromanschluss, der mit dem zweiten Ende (126) der Sekundärspule (121, 123) gekoppelt ist; eine zweite Induktivität (L2), die zwischen dem zweiten Knoten (132) und einem gespiegelten Ausgangsknoten (134) gekoppelt ist; und eine zweite Kapazität (C2), die zwischen dem gespiegelten Ausgangsknoten (134) und dem Zwischenabgriff (122) gekoppelt ist, zum Entwickeln einer gespiegelten Ausgangsspannung (VOUT2) zwischen dem gespiegelten Ausgangsknoten (134) und dem Zwischenabgriff (122);
eine Ausgangsschaltungsanordnung (122), die umfasst: eine dritte Induktivität (L3), die zwischen dem Zwischenabgriff (122) und einem dritten Knoten (202) gekoppelt ist; einen fünften Transistor (SA), der zwischen dem gespiegelten Ausgangsknoten (134) und dem dritten Knoten (202) gekoppelt ist; einen sechsten Transistor (SB), der zwischen dem dritten Knoten (202) und dem Hauptausgangsknoten (130) gekoppelt ist; und eine Ausgangssteuerung (204), die zum Steuern des fünften und sechsten Transistors (SA, SB) gekoppelt ist, wobei die Ausgangsschaltungsanordnung (122) dazu ausgelegt ist, einen Spannungspegel der gespiegelten Ausgangsspannung (VOUT2) zu regeln und Laststrom (IOUT) von dem gespiegelten Leistungswandler (108) an den Hauptausgangsknoten (130) bereitzustellen; und
eine Wandlersteuerung (110), die dazu ausgelegt ist, die Leistungsversorgung (102) zu steuern, um einen Spannungspegel der Hauptausgangsspannung (VOUT1) zu regeln, wobei die Wandlersteuerung (110) mit einem Steueranschluss von jedem des ersten, zweiten, dritten und vierten Transistors (S1, S2, S3, S4) gekoppelt ist.

2. DC-DC-Wandler (100) nach Anspruch 1, wobei bei Ausfall entweder des dritten oder des vierten Transistors (S3, S4) die Wandlersteuerung (110) dazu ausgelegt ist, den durch den Hauptleistungswandler (106) bereitgestellten Laststrom zu erhöhen, und wobei die Ausgangsschaltungsanordnung (112) dazu ausgelegt ist, den Betrieb des gespiegelten Leistungswandlers (108) anzupassen, um den an den Hauptausgangsknoten (130) bereitgestellten Laststrom zu ergänzen.

3. DC-DC-Wandler (100) nach Anspruch 1, ferner umfassend eine erste Sicherung (F1), die in Reihe mit dem ersten und dem zweiten Stromanschluss des ersten Transistors (S1) gekoppelt ist, eine zweite Sicherung (F2), die in Reihe mit dem ersten und dem zweiten Stromanschluss des zweiten Transistors (S2) gekoppelt ist, eine dritte Sicherung (F3), die in Reihe mit dem ersten und dem zweiten Stromanschluss des dritten Transistors (S3) gekoppelt ist, und eine vierte Sicherung (F4), die in Reihe mit dem ersten und dem zweiten Stromanschluss des vierten Transistors (S4) gekoppelt ist.

4. DC-DC-Wandler (100) nach einem der Ansprüche 1 bis 3, wobei die Ausgangsschaltungsanordnung (112) dazu ausgelegt ist, den durch den gespiegelten Leistungswandler (108) bereitgestellten Laststrom bei Ausfall entweder des ersten oder des zweiten Transistors (S1, S2) zu erhöhen.

## Revendications

1. Convertisseur continu-continu (100), comprenant :
un transformateur (104) pourvu d'une bobine primaire (120) configurée pour être excitée par une alimentation électrique (102) et pourvue d'une bobine secondaire (121, 123) avec une prise intermédiaire (122) ;
un convertisseur de puissance principal (106) comprenant : un premier transistor (S1) pourvu d'une première borne de courant couplée à une première extrémité de la bobine secondaire (121, 123) et d'une deuxième borne de courant couplée à un premier nœud (128) ; un deuxième transistor (S2) pourvu d'une première borne de courant couplée à une deuxième extrémité de la bobine secondaire (121, 123) et d'une deuxième borne de courant couplée au premier nœud (128) ; une première inductance (L1) couplée entre le premier nœud (128) et un nœud de sortie principal (130) ; et une première capacité (C1) couplée entre le nœud de sortie principal (130) et la prise intermédiaire (122) pour établir une tension de sortie principale (VOUT1) entre le nœud de sortie principal (130) et la prise intermédiaire (122) ;
un convertisseur de puissance en miroir (108) comprenant : un troisième transistor (S3) pourvu d'une première borne de courant couplée à un deuxième nœud (132) et d'une deuxième borne de courant couplée à la première extrémité de la bobine secondaire (121, 123) ;
un quatrième transistor (S4) pourvu d'une première borne de courant couplée au deuxième nœud (132) et d'une deuxième borne de courant couplée à la deuxième extrémité (126) de la bobine secondaire (121, 123) ; une deuxième inductance (L2) couplée entre le deuxième nœud (132) et un nœud de sortie en miroir (134) ; et une deuxième capacité (C2) couplée entre le nœud de sortie en miroir (134) et la prise intermédiaire (122) pour établir une tension de sortie en miroir (VOUT2) entre le nœud de sortie en miroir (134) et la prise intermédiaire (122) ;
une circuiterie de sortie (122) comprenant : une troisième inductance (L3) couplée entre la prise intermédiaire (122) et un troisième nœud (202) ; un cinquième transistor (SA) couplé entre le nœud de sortie en miroir (134) et le troisième nœud (202) ; un sixième transistor (SB) couplé entre le troisième nœud (202) et le nœud de sortie principal (130) ; et un contrôleur de sortie (204) couplé de manière à commander les cinquième et sixième transistors (SA, SB), la circuiterie de sortie (122) étant configurée pour réguler un niveau de tension de la tension de sortie en miroir (VOUT2) et pour fournir un courant de charge (IOUT) au nœud de sortie principal (130) depuis le convertisseur de puissance en miroir (108) ; et
un contrôleur de convertisseur (110) configuré pour commander l'alimentation électrique (102) afin de réguler un niveau de tension de la tension de sortie principale (VOUT1), le contrôleur de convertisseur (110) étant couplé à une borne de commande de chacun des premier, deuxième, troisième et quatrième transistors (S1, S2, S3, S4).

2. Convertisseur continu-continu (100) selon la revendication 1, dans lequel, lors d'une défaillance de l'un quelconque des troisième et quatrième transistors (S3, S4), le contrôleur de convertisseur (110) est configuré pour augmenter un courant de charge fourni par le convertisseur de puissance principal (106) et dans lequel la circuiterie de sortie (112) est configurée pour ajuster le fonctionnement du convertisseur de puissance en miroir (108) pour suppléer un courant de charge fourni au nœud de sortie principal (130).

3. Convertisseur continu-continu (100) selon la revendication 1, comprenant en outre un premier fusible (F1) couplé en série avec les première et deuxième bornes de courant du premier transistor (S1), un deuxième fusible (F2) couplé en série avec les première et deuxième bornes de courant du deuxième transistor (S2), un troisième fusible (F3) couplé en série avec les première et deuxième bornes de courant du troisième transistor (S3), et un quatrième fusible (F4) couplé en série avec les première et deuxième bornes de courant du quatrième transistor (S4).

4. Convertisseur continu-continu (100) selon l'une quelconque des revendications 1 à 3, dans lequel la circuiterie de sortie (112) est configurée pour augmenter un courant de charge fourni par le convertisseur de puissance en miroir (108) lors d'une défaillance de l'un quelconque des premier et deuxième transistors (S1, S2).
